# EUROPEAN PATENT APPLICATION

(11) **EP 3 316 190 A1**
(43) Date of publication of application: **02.05.2018**
(21) Application number: 17199184.7
(22) Date of filing: 30.10.2017
(51) Int. Cl.: G06Q 10/00

(54) **SYSTEM AND METHOD OF FILE VIEWER**

(30) Priority: 31.10.2016 KR 20160142747
(71) Applicant: Samsung SDS Co., Ltd., Seoul 05510 (KR)
(72) Inventor: SHIN, Kwang Wook, 05510 Seoul (KR)
(74) Representative: Grünecker Patent- und Rechtsanwälte PartG mbB

(57) **Abstract**

Disclosed are a system and method of file viewer. The file viewer system comprises at least one processor configured to implement an image view predictor configured to predict whether a user will request an image view of an attachment file included in a service message, an image generation requester configured to generate a view image generation request message in response to the image view predictor predicting the user will request the image view, and a view image generator configured to generate a view image of the attachment file in response to the view image generation request message.

## Description

### BACKGROUND

### 1. Field

The present disclosure relates to a technology for providing a viewer function of an attachment file through an Internet-based service.

### 2. Discussion of Related Art

An attachment file may be included in a message transmitted and received through an Internet-based service, and after downloading such an attachment file, a user may check the content of the attachment file by executing a program installed in a device such as a computer and the like. However, when the user tries to briefly view the content of the attachment file, a viewer function is used because the attachment file has a large amount of data. The viewer function is a technology for converting an attachment file into an image file and providing the image file to a user without downloading the attachment file. Even when a program corresponding to an extension of the attachment file is not installed in the user's device, it is possible to check the content of the attachment file through a simple image view using such a viewer function.

However, when all attachment files transmitted and received through an Internet-based service are converted into image files, an image file is generated even for attachment files which do not support the viewer function, and resources are unnecessarily wasted.

According to a related art, an attachment file is converted into an image form and provided to the user, so as to efficiently use resources, only when a user runs the viewer function for the attachment file. In this case, since an image file is generated only when the user runs the viewer function for the attachment file, there is a delay for the user in checking the content of the attachment file.

Consequently, a technology for allowing a user to rapidly check content of attachment files while efficiently using resources is necessary.

### SUMMARY

The present disclosure is directed to allowing a user to rapidly check content of attachment files while improving resource efficiency.

According to an aspect of the present disclosure, there is provided a file viewer system comprising: at least one processor configured to implement: an image view predictor configured to predict whether a user will request an image view of an attachment file included in a service message; an image generation requester configured to generate a view image generation request message in response to the image view predictor predicting the user will request the image view; and a view image generator configured to generate a view image of the attachment file in response to the view image generation request message.

The image view predictor may be further configured to whether the user will request the image view of the attachment file based on at least one among a degree of user proximity to the attachment file, a viewing record of the user for previously received attachment files, and type of received service message.

The at least one processor may be further configured to implement a view image displayer configured to receive the view image from the view image generator and provide the view image to the user in response to a request for the image view of the attachment file.

The at least one processor may be further configured to implement an attachment file processor configured to store the attachment file, and transmit the attachment file to the view image generator in response to the view image generator receiving the view image generation request message.

The service message may comprise least one among a title of the service message, a list of attachment files, and body text.

The view image displayer may be further configured to display the title to the user through a display screen, and the image view predictor may be further configured to predict the user will request the image view in response to the user viewing the list and the body text by selecting the displayed title.

The image view predictor may be further configured to predict the user will request the image view after a set amount of time elapses while the list of attachment files and the body text are being viewed.

At least one among the image view predictor may be further configured to predict the user will not request the image view of the attachment file included in the service message and the image generation requester may be further configured to not generate the view image generation request message in response to the service message being a spam message.

The image view predictor may be further configured to predict the user will not request the image view in response to body text included in the received service message being identical to body text included in a previously received service message and the user did not request an image view of an attachment file included in the previously received service message.

The at least one processor may be further configured to implement an image view recorder configured to store a viewing record comprising at least one among view frequencies and view request times of the user for attachment files included in one or more previously received service messages, and the image view predictor may be further configured to predict whether the user will request the image view on the basis of the viewing record.

According to another aspect of the present disclosure, there is provided a method of file viewer comprising: predicting, by an image view predictor, whether a user will request an image view of an attachment file included in a service message; generating, by an image generation requester, a view image generation request message in response to the image view predictor predicting the user will request the image view; and generating, by a view image generator, a view image of the attachment file in response to the view image generation request message being received.

The predicting whether the user will request the image view may include predicting whether the user will request the image view of the attachment file on the basis of at least one among a degree of user proximity to the attachment file, a viewing record of the user for previously received attachment files, and type of received service message.

The method may further comprise receiving, by a view image displayer, the view image from the view image generator and providing the view image to the user in response to a request for the image view of the attachment file.

The method may further comprise, transmitting, by an attachment file processor, the attachment file to the view image generator after the view image generation request message is received.

The service message may comprise at least one among a title of the service message, a list of attachment files, and body text.

The method may further comprise displaying, by the view image displayer, the title to the user through a display screen, and the predicting whether the user will request the image view may comprises predicting the user will request the image view in response to the user viewing the corresponding list of attachment files and the corresponding body text by selecting the displayed title.

The predicting whether the user will request the image view may comprise predicting the user will request the image view after a set amount of time elapses while the list of attachment files and the body text are being viewed.

The method may further comprise, in response to the service message being a spam message, any one of: predicting, by the image view predictor, the user will not request the image view of the attachment file included in the service message; and generating, by the image generation requester, no view image generation request message.

The predicting whether the user will request the image view may comprise predicting the user will not request the image view in response to body text included in the received service message being identical to body text included in a previously received message and the user did not request an image view of an attachment file included in the previously received service message.

The method may further comprise storing, by an image view recorder, a viewing record comprising at least one among view frequencies and view request times of the user for attachment files included in one or more previously received service messages, and the predicting whether the user will request the image view may include predicting whether the user will request the image view on the basis of the viewing record.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a block diagram showing a detailed configuration of a file viewer system according to an exemplary embodiment of the present disclosure;
FIG. 2 is a block diagram showing a detailed configuration of a file viewer system according to an exemplary embodiment of the present disclosure;
FIG. 3 is a sequence diagram illustrating a method of file viewer according to an exemplary embodiment of the present disclosure; and
FIG. 4 is a block diagram illustrating an example of a computing environment including a computing device appropriate for use in exemplary embodiments.

### DETAILED DESCRIPTION OF EXEMPLARY EMBODIMENTS

Hereinafter, exemplary embodiments of the present disclosure will be described in detail with reference to the drawings. The following detailed description is provided to help comprehensive understanding of a method, an apparatus, and/or a system disclosed herein. However, this is merely exemplary, and the present disclosure is not limited thereto.

While describing the present disclosure, when it is determined that a detailed description of a known art related to the present disclosure may unnecessarily obscure the gist of the present disclosure, the detailed description will be omitted. Terms which will be used below are defined in consideration of functionality in the present disclosure, which may vary according to an intention of a user or an operator or a usual practice. Therefore, definitions thereof should be made on the basis of the overall contents of this specification. Terminology used herein is for the purpose of describing exemplary embodiments of the present disclosure only and is not intended to be limiting. The singular forms are intended to include the plural forms as well, unless the context clearly indicates otherwise. It should be understood that the terms "comprises," "comprising," "includes," and "including," when used herein, specify the presence of stated features, numerals, steps, operations, elements, or combinations thereof, but do not preclude the presence or addition of one or more other features, numerals, steps, operations, elements, or combinations thereof.

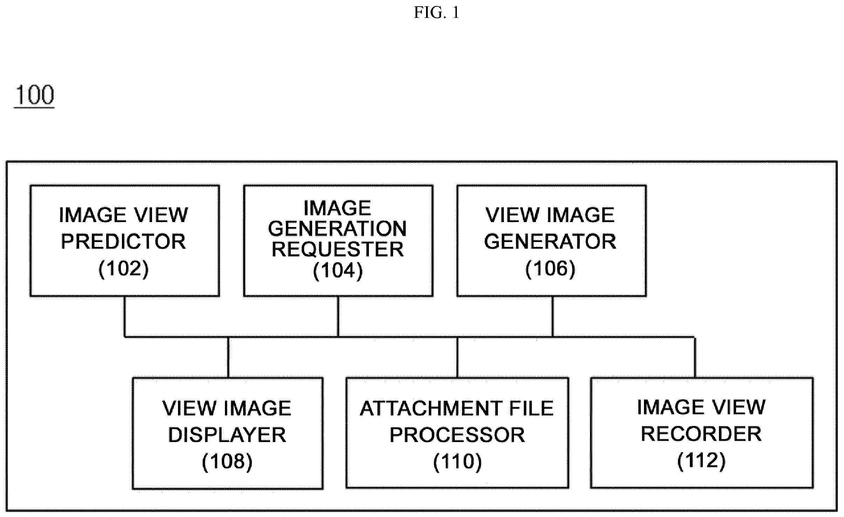

FIG. 1 is a block diagram showing a detailed configuration of a file viewer system 100 according to an exemplary embodiment of the present disclosure. As shown in FIG. 1, the file viewer system 100 according to an exemplary embodiment of the present disclosure may include an image view predictor 102, an image generation requester 104, a view image generator 106, a view image displayer 108, an attachment file processor 110, and an image view recorder 112.

The image view predictor 102 is a module which predicts whether a user will view an attachment file included in a service message in an image form when the service message is received through an Internet-based service. The Internet-based service is intended to provide a service to a user in a network and may be, for example, an email service, a payment service, a scheduler service, and the like. The service message may be, for example, email transmitted and received through an email service, a payment request message in a payment service, an upload notification message in a scheduler service, and the like, but is not necessarily limited thereto. The attachment file is a file attached to the message and transmitted along with the message and may be, for example, a bill, an electronic approval document, a schedule file, and the like. Also, the attachment file may have a format, such as a Hangul file (hwp), a Word file (doc, docx), a PowerPoint presentation file (ppt, pptx), an Excel file (xls, xlsx), and the like, but is not necessarily limited thereto.

In exemplary embodiments of the present disclosure, a user who views an image of an attachment file denotes that he or she is provided an overview of the attachment file through a viewer function. The viewer function is intended to provide an overview of the content or configuration of an attachment file and may also be referred to as a preview function. Meanwhile, the image is a collection of digital data that may be rasterized through a screen, a printer, or the like, and may have a format of joint photographic experts group (JPEG), tagged image file format (TIFF), graphic interchange format (GIF), and the like. According to an exemplary embodiment, the service message of the Internet-based service may be composed of a title (or a header), a list of attachment files, and body text. Specifically, the Internet-based service may display a list of titles of service messages through the view image displayer 108, which will be described below. By selecting any one of the displayed titles of service messages, the user may check a list of attachment files and body text of a service message corresponding to the title. However, in the list of attachment files, only filenames and extensions (e.g., hwp, doc, docx, ppt, pptx, xls, xlsx, and the like) of the attachment files are shown, and content of the attachment files is not shown. In other words, it is difficult for the user to check content of the attachment files included in the service message only by checking the service message displayed by the view image displayer 108. To check the content of the attachment files, a user may download and open the attachment files or view images of the attachment files. However, the user who does not request a view of an image of an attachment file does not denote that he or she does not check the attachment file. This is because the user may not view the attachment file through the viewer function but may download the attachment file and check content of the attachment file.

The image view predictor 102 may predict whether a user will request an image view of an attachment file in a received service message. In other words, the image view predictor 102 may calculate a probability that the user will view each attachment file included in the service message and select an attachment file which is highly likely to be viewed by the user.

According to an exemplary embodiment, the image view predictor 102 may predict whether the user will request an image view on the basis of at least one of the degree of user proximity to the attachment file, type of service message, and a viewing record of the user for attachment files received in the past. A process in which the image view predictor 102 predicts whether a user will request an image view of an attachment file will be described in detail below.

According to an exemplary embodiment, the image view predictor 102 may predict whether the user will request an image view on the basis of the degree of user proximity to an attachment file. Specifically, the image view predictor 102 may display a title of a service message to the user through the view image displayer 108 and predict that the user will request an image view when the user views a corresponding list of attachment files and corresponding body text by selecting the displayed title. In other words, the image view predictor may predict that the user will request an image view when the user approaches close enough to an attachment file that it is possible to expect that the user will surely view an image of the attachment file. The user may select a displayed title through an input device such as a keyboard, a mouse, a touch screen, and the like, which interoperates with the view image displayer 108. As described above, a service message may be composed of a title thereof, a list of attachment files, and body text.

Also, the image view predictor 102 may predict that the user will request an image view when a time the user spends viewing one or more of the list of attachment files and body text of a service message exceeds a set amount of time. According to an exemplary embodiment, when a plurality of attachment files are included in a service message, only titles of some of the attachment files are displayed in the list of attachment files of the service message, and a sign indicating that there are attachment files other than those displayed, for example, "...," "and two more," and the like, may be shown. The user may expand the list and view titles of the hidden attachment files among the attachment files, and in this case, the image view predictor 102 may predict that the user will request an image view of the hidden attachment files.

According to an exemplary embodiment, the image view predictor 102 may predict whether the user will request an image view on the basis of type of service message. Specifically, when a received service message is a spam message which is transmitted to many unspecified persons, the image view predictor 102 may predict that the user will not request an image view of an attachment file included in the service message.

Further, according to an exemplary embodiment, the image view predictor 102 may predict that the user will not request an image view when a received service message includes the same body text as a message received in the past and the user did not request an image view of an attachment file included in the service message received in the past. Here, the body text of the service message may be, for example, a reminder of a schedule of periodic meetings in a company. However, the image view predictor 102 may predict that the user will request an image view of an attachment file when a sentence for requesting a view of the attachment file is included in the body text of a service message. Also, the image view predictor 102 may predict that the user will request an image view of an attachment file when a mention of a filename or an extension (e.g., pptx, xlsx, and the like) of the attachment file is included in body text of a service message. Further, the image view predictor 102 may predict that the user will request an image view of an attachment file when the body text of a service message is of a certain length or less. According to an exemplary embodiment, the image view predictor 102 may predict whether the user will request an image view of an attachment file on the basis of a viewing record of the user for attachment files stored in the image view recorder 112, which will be described below. Here, the viewing record for the attachment file may include information about whether the user downloaded an attachment file and checked content of the attachment file or viewed the attachment file in the form of an image file, and information about a time at which the user viewed the attachment file if the user viewed an image of the attachment file. Specifically, the viewing record may include at least one of view frequencies and view request times of the user for attachment files included in service messages received in the past through the Internet-based service. For example, when the user requested an image view of an attachment file in the past a long period of time after a service message including the attachment file had been received, the image view predictor 102 may predict that the user will not request an image view of an attachment file included in a new service message until a long period of time elapses after the new service message is received.

The image view predictor 102 may select an attachment file which is highly likely to be viewed by the user, thereby preventing waste of resources caused by unnecessarily converting an attachment file into a view image.

The image generation requester 104 is a module which requests generation of a view image according to a prediction result of the image view predictor 102. Specifically, the image generation requester 104 may generate a view image generation request message when the image view predictor 102 determines that the user will request an image view. The view image generation request message is a message transmitted to the view image generator 106, which will be described below, and is intended to request generation of an image of an attachment file included in the corresponding service message.

Specifically, when the image view predictor 102 determines that the user will request an image view of a specific attachment file, the image generation requester 104 may generate a view image generation request message. Subsequently, the image generation requester 104 may transmit the view image generation request message to the view image generator 106. Accordingly, the image generation requester 104 may request the view image generator 106 to generate an image of the attachment file before the user actually requests an image view.

The view image generator 106 is a module for generating a view image. The view image is a target to be viewed by the user and is obtained by converting an attachment file into an image form.

Specifically, the view image generator 106 may receive the view image generation request message from the image generation requester 104. Next, the view image generator 106 may request the attachment file processor 110, which will be described below, to transmit the attachment file. The view image generator 106 may receive the attachment file from the attachment file processor 110. Subsequently, the view image generator 106 may convert the attachment file into an image format. Here, the image is a collection of digital data that may be output on a display screen of view image displayer 108. A process of generating the image of the attachment file may employ any method of generating and storing a digital image and is not limited to a specific method. As mentioned above, the image format may be JPEG, TIFF, GIF, and the like. The view image generator 106 may store beforehand the generated image. To this end, the view image generator 106 may have a storage.

When the view image displayer 108 actually receives a request for an image view of the attachment file from the user after generating the image of the attachment file, the view image generator 106 may provide the previously stored view image to the view image displayer 108. In other words, the view image generator 106 may transmit the previously generated view image to the view image displayer 108 only when the user actually requests a view of the image of the attachment file. Specifically, when the view image displayer 108 transmits to the view image generator 106 a notification that the request has been received from the user, the view image generator 106 may transmit the previously generated view image to the view image displayer 108.

The view image generator 106 may generate beforehand and store an image of an attachment file which is predicted to be viewed by the user and provide the image to the view image displayer 108 when the user actually requests an image view of the attachment file. Accordingly, the view image displayer 108 may provide the viewer function for the attachment file to the user with minimized delay caused by image conversion.

The view image generator 106 may convert an attachment file into an image and provide the image to the view image generator 106, so that content of the attachment file may be provided to the user using a small amount of resources. This is because the image does not include a function for editing the content and the format. Also, since an attachment file is converted into an image and provided to the user, the user may easily view content of the attachment file even when software related to an extension of the attachment file is not installed in the view image displayer 106. The view image displayer 108 is a module for displaying a view image to the user and may be provided in, for example, a desktop computer, a laptop computer, a smart phone, a personal digital assistant (PDA), and the like. In exemplary embodiments of the present disclosure, the view image displayer 108 may be a means for providing the Internet-based service as well as a view image. Specifically, when a service message including an attachment file is received through the Internet-based service, the view image displayer 108 may display the service message to the user. To this end, an application or a program for providing the Internet-based service to the user may be installed in a client device 202, such as a desktop computer, laptop computer, smart phone, PDA, and the like. The view image displayer 108 may have a display screen.

The view image displayer 108 may interoperate with an input module, such as a keyboard, a mouse, a touch screen, and the like, to receive an input of the user. Specifically, the view image displayer 108 may receive a request for an image view from the user. In other words, the view image displayer 108 may receive the request from the user through a user interface displayed on the display screen. When the request is input by the user, the view image displayer 108 may notify the view image generator 106 that the request has been input. Subsequently, the view image displayer 108 may receive a previously generated view image from the view image generator 106 and provide the received view image to the user.

According to an exemplary embodiment, when a view image generation request message is received from the image generation requester 104, the view image generator 106 may request transmission of an attachment file from the attachment file processor 110. Accordingly, the attachment file processor 110 may transmit the attachment file to the view image generator 106. In other words, the attachment file may be stored in the attachment file processor 110 until the image generation requester 104 generates the view image generation request message.

The image view recorder 112 is a module for storing a viewing record of the user for attachment files and providing the viewing record to the image view predictor 102. The viewing record may include at least one of view frequencies and view request times of the user for attachment files included in service messages received in the past. Subsequently, the image view predictor 102 may determine whether the user will request an image view of an attachment file with reference to the viewing record.

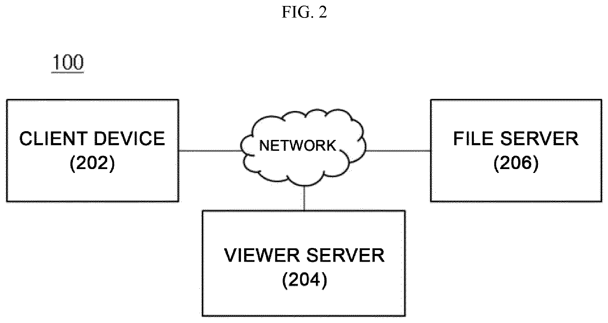

FIG. 2 is a block diagram showing a detailed configuration of the file viewer system 100 according to an exemplary embodiment of the present disclosure. As shown in FIG. 2, the file viewer system 100 according to an exemplary embodiment of the present disclosure may include a client device 202 and one or more servers. Specifically, the servers may be the viewer server 204 and the file server 206. FIG. 1 illustrates the file viewer system 100 in terms of software, and FIG. 2 illustrates the file viewer system 100 in terms of devices constituting the file viewer system 100.

In exemplary embodiments of the present disclosure, the client device 102, the viewer server 104, and the file server 106 may be connected via a network. The network may be any type of network capable of packet communication such as a wired or wireless Internet network and a mobile communication network.

The client device 202 is a device for providing an Internet-based service to a user and may be, for example, a desktop computer, a laptop computer, a smart phone, a PDA, and the like. An application or a program for providing the Internet-based service to the user may be installed in the client device 202. Also, the client device 202 may have a network function for communicating with the viewer server 204 which will be described below.

The viewer server 204 is intended to provide the viewer function by converting an attachment file into an image. The viewer server 204 may receive an attachment file from the file server 206 which will be described below. Subsequently, the viewer server 204 may convert the attachment file into an image format.

The file server 206 is a server for storing attachment files. Specifically, the file server 206 may store programs, files, and the like required to provide the Internet-based service.

According to an exemplary embodiment, the image view predictor 102, the image generation requester 104, the view image displayer 108, and the image view recorder 112 may be provided in the client device 202, the view image generator 106 may be provided in the viewer server 204, and the attachment file processor 110 may be provided in the file server 206.

According to another exemplary embodiment, the view image displayer 108 illustrated in FIG. 1 may be provided in the client device 202, the image view predictor 102, the image generation requester 104, the view image generator 106, and the image view recorder 112 may be provided in the viewer server 204, and the attachment file processor 110 may be provided in the file server 206.

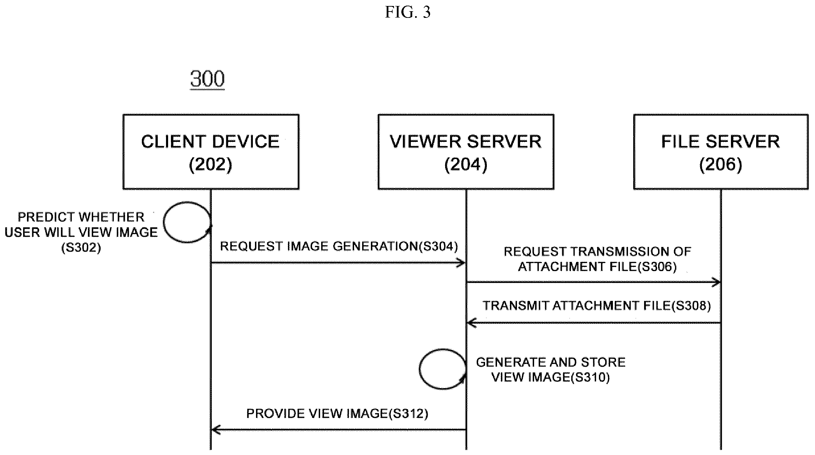

FIG. 3 is a sequence diagram illustrating a method of file viewer 300 according to an exemplary embodiment of the present disclosure. Although the method is depicted as a plurality of steps in the shown sequence diagram, at least some steps may be performed in a different order, performed in combination with other steps, omitted, or subdivided and performed, or one or more steps which are not shown in the drawing may be additionally performed.

FIG. 3 illustrates that the file viewer system 100 includes the client device 202, the viewer server 204, and the file server 206. However, this is merely intended to help understanding, and the method 300 may be described with the file viewer system 100 including the image view predictor 102, the image generation requester 104, the view image generator 106, the view image displayer 108, the attachment file processor 110, and the image view recorder 112.

Also, FIG. 3 illustrates that the image view predictor 102, the image generation requester 104, and the image view recorder 112 are provided in the client device 202. However, this is merely intended to help understanding, and the image view predictor 102, the image generation requester 104, and the image view recorder 112 may be provided in the viewer server 204 as mentioned above.

When a service message including an attachment file is received through an Internet-based service, the client device 202 may predict whether a user will request an image view of the attachment file (S302). Specifically, when the service message including the attachment file is received through the Internet-based service, the client device 202 may predict whether the user will request the image view of the attachment file on the basis of at least one of the degree of user proximity to the attachment file, type of service message, and a viewing record of the user for attachment files.

According to an exemplary embodiment, the service message may be composed of a title thereof, a list of attachment files, and body text, and the client device 202 may display the title to the user through a display screen and predict that the user will request the image view when the user views the corresponding list of attachment files and the corresponding body text by selecting the displayed title. Also, the client device 202 may predict that the user will request the image view after a set amount of time elapses while the list and the body text are being viewed.

According to an exemplary embodiment, when the service message is a spam message which is transmitted to many unspecified persons, the client device 202 may predict that the user will not request the image view. Also, the client device 202 may predict that the user will not request the image view when the received service message includes the same body text as a message received in the past and the user did not request an image view of an attachment file included in the service message received in the past.

According to an exemplary embodiment, the client device 202 may store a viewing record of attachment files including at least one of image view frequencies and view request times of the user for attachment files included in service messages received in the past through the Internet-based service, and predict whether the user will request the image view on the basis of the viewing record.

The client device 202 may generate a view image generation request message for generating an image according to a prediction result (S304).

When the viewer server 204 receives the view image generation request message from the client device 202, the file server 206 which stores the attachment file may transmit the stored attachment file to the viewer server 204 (S306).

When the view image generation request message is received from the client device 202, the viewer server 204 may generate beforehand an image of the attachment file (S308).

When the client device 202 receives a request for the image view from the user, the viewer server 204 may provide the previously generated image to the client device 202 (S310).

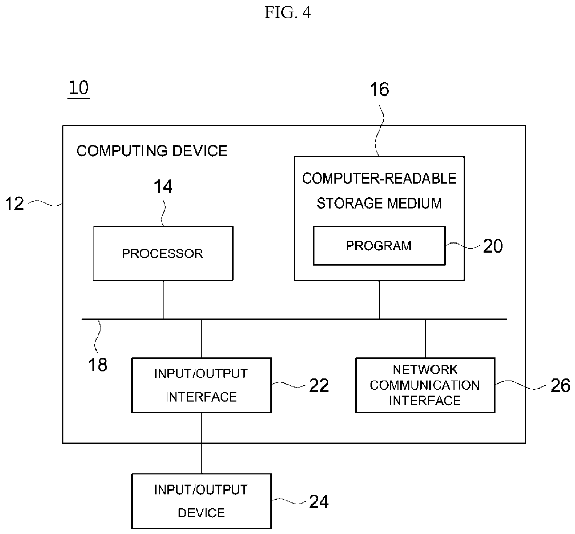

FIG. 4 is a block diagram illustrating an example of a computing environment 10 including a computing device appropriate for use in exemplary embodiments. In the exemplary embodiment shown in the drawing, each component may have a function and a capability other than those described below, and an additional component other than the components described below may be included.

The computing environment 10 shown in the drawing includes a computing device 12. In an exemplary embodiment, the computing device 12 may be the client device 202. Also, the computing device 12 may be the viewer server 204. Further, the computing device 12 may be the file server 206. FIG. 4 shows a configuration of the computing device 12 according to an exemplary embodiment of the present disclosure in terms of hardware. On the other hand, FIG. 1 shows a configuration of the present disclosure in terms of software.

The computing device 12 includes at least one processor 14, a computer-readable storage medium 16, and a communication bus 18. The processor 14 may cause the computing device 12 to operate according to the above-described exemplary embodiments. For example, the processor 14 may execute one or more programs stored in the computer-readable storage medium 16. The one or more programs may include one or more computer-executable instructions, which may be configured, when executed by the processor 14, to cause the computing device 12 to perform operations according to an exemplary embodiment.

The computer-readable storage medium 16 is configured to store computer-executable instructions or program codes, program data, and/or information in other appropriate forms. A program 20 stored in the computer-readable storage medium 16 includes a set of instructions executable by the processor 14. In an exemplary embodiment, the computer-readable storage medium 16 may be a memory (a volatile memory such as a random access memory (RAM), a non-volatile memory, or an appropriate combination thereof), one or more magnetic disk storage devices, optical disk storage devices, flash memory devices, another form of storage medium which is accessible by the computing device 12 and capable of storing desired information, or an appropriate combination thereof.

The communication bus 18 connects various other components of the computing device 12 including the processor 14 and the computer-readable storage medium 16 to each other.

The computing device 12 may also include one or more input/output interfaces 22 for one or more input/output devices 24 and one or more network communication interfaces 26. The input/output interfaces 22 and the network communication interfaces 26 are connected to the communication bus 18. The input/output devices 24 may be connected to other components of the computing device 12 via the input/output interfaces 22. Examples of the input/output devices 24 may include input devices such as a pointing device (a mouse, a trackpad, and the like), a keyboard, a touch input device (a touchpad, a touch screen, and the like), a voice or sound input device, various types of sensor devices, and/or a photographing device, and/or output devices such as a display device, a printer, a speaker, and/or a network card. Examples of the input/output devices 24 may be included in the computing device 12 as components constituting the computing device 12, or may be connected to the computing device 12 as separate devices distinguished from the computing device 12.

According to exemplary embodiments of the present disclosure, an attachment file to be viewed by a user is selected and converted into an image form in advance. Therefore, when the user requests a view of an image of the attachment file, it is possible to rapidly provide a view function for the attachment file.

Although exemplary embodiments of the present disclosure have been described in detail above, those of ordinary skill in the art to which the present disclosure pertains will appreciate that various modifications may be made without departing from the scope of the present disclosure. Therefore, the scope of the present disclosure is to be determined by the following claims.

## Claims

1. A file viewer system comprising:
at least one processor configured to implement:
an image view predictor configured to predict whether a user will request an image view of an attachment file included in a service message;
an image generation requester configured to generate a view image generation request message in response to the image view predictor predicting the user will request the image view; and
a view image generator configured to generate a view image of the attachment file in response to the view image generation request message.

2. The file viewer system of claim 1, wherein the image view predictor is further configured to predict whether the user will request the image view of the attachment file based on at least one among a degree of user proximity to the attachment file, a viewing record of the user for previously received attachment files, and a type of received service message.

3. The file viewer system of claim 1 or 2, wherein the at least one processor is further configured to implement a view image displayer configured to receive the view image from the view image generator and provide the view image to the user in response to a request for the image view of the attachment file,
wherein the service message comprises at least one among a title of the service message, a list of attachment files, and body text,
wherein the view image displayer is further configured to display the title to the user through a display screen,
wherein the image view predictor is further configured to predict the user will request the image view in response to the user viewing the list and the body text by selecting the displayed title, and
wherein the image view predictor is further configured to predict the user will request the image view after a set amount of time elapses while the list of attachment files and the body text are being viewed.

4. The file viewer system of one of claims 1 to 3, wherein the at least one processor is further configured to implement an attachment file processor configured to store the attachment file, and transmit the attachment file to the view image generator in response to the view image generator receiving the view image generation request message.

5. The file viewer system of one of claims 1 to 4, wherein at least one among the image view predictor is further configured to predict the user will not request the image view of the attachment file included in the service message and the image generation requester is further configured to not generate the view image generation request message in response to the service message being a spam message.

6. The file viewer system of one of claims 1 to 5, wherein the image view predictor is further configured to predict the user will not request the image view in response to body text included in the received service message being identical to body text included in a previously received service message and the user did not request an image view of an attachment file included in the previously received service message.

7. The file viewer system of one of claims 1 to 6, wherein the at least one processor is further configured to implement an image view recorder configured to store a viewing record comprising at least one among view frequencies and view request times of the user for attachment files included in one or more previously received service messages, and
wherein the image view predictor is further configured to predict whether the user will request the image view based on the viewing record.

8. A method of file viewer comprising:
predicting, by an image view predictor, whether a user will request an image view of an attachment file included in a service message;
generating, by an image generation requester, a view image generation request message in response to the image view predictor predicting the user will request the image view; and
generating, by a view image generator, a view image of the attachment file in response to the view image generation request message being received.

9. The method of claim 8, wherein the predicting whether the user will request the image view comprises predicting whether the user will request the image view of the attachment file based on at least one among a degree of user proximity to the attachment file, a viewing record of the user for previously received attachment files, and a type of received service message.

10. The method of claim 8 or 9, further comprising receiving, by a view image displayer, the view image from the view image generator and providing the view image to the user in response to a request for the image view of the attachment file.

11. The method of one of claims 8 to 10, further comprising transmitting, by an attachment file processor, the attachment file to the view image generator after the view image generation request message is received.

12. The method of claim 10, wherein the service message comprises at least one among a title of the service message, a list of attachment files, and body text,
wherein the method further comprises displaying, by the view image displayer, the title to the user through a display screen,
wherein the predicting whether the user will request the image view comprises predicting the user will request the image view in response to the user viewing the corresponding list of attachment files and the corresponding body text by selecting the displayed title, and
wherein the predicting whether the user will request the image view comprises predicting the user will request the image view after a set amount of time elapses while the list of attachment files and the body text are being viewed.

13. The method of one of claims 8 to 12, further comprising, in response to the service message being a spam message, any one of:
predicting, by the image view predictor, the user will not request the image view of the attachment file included in the service message; and
generating, by the image generation requester, no view image generation request message.

14. The method of one of claims 8 to 13, wherein the predicting whether the user will request the image view comprises predicting the user will not request the image view in response to body text included in the received service message being identical to body text included in a previously received message and the user did not request an image view of an attachment file included in the previously received service message.

15. The method of one of claims 8 to 14, further comprising storing, by an image view recorder, a viewing record comprising at least one among view frequencies and view request times of the user for attachment files included in one or more previously received service messages,
wherein the predicting whether the user will request the image view comprises predicting whether the user will request the image view based on the viewing record.
